# FASCICULE DE BREVET EUROPEEN

(11) **EP 1 218 439 B1**
(45) Date de publication et mention de la délivrance du brevet: **17.09.2003**
(21) Numéro de dépôt: 00956600.1
(22) Date de dépôt: 02.08.2000
(51) Int. Cl.: C08J 7/02, G02B 1/04

(54) **PROCEDE DE POLISSAGE D'UN ARTICLE OPTIQUE, AU MOYEN D'UN SOLVANT OU D'UN MELANGE DE SOLVANTS**
VERFAHREN ZUR OBERFLÄCHENBEHANDLUNG EINES OPTISCHEN ARTIKELS MITTELS EINER LÖSUNGSMITTEL ODER EINER MISCHUNG VON LÖSUNGSMITTELN
METHOD FOR SURFACE POLISHING OF AN OPTICAL PRODUCT USING A SOLVENT OR A MIXTURE OF SOLVENTS

(30) Priorité: 06.08.1999 FR 9910230
(43) Date de publication de la demande: 03.07.2002
(73) Titulaire: ESSILOR INTERNATIONAL COMPAGNIE GENERALE D'OPTIQUE, 94227 Charenton cédex (FR)
(72) Inventeur: PRIEUR-BLANC, Aude 108bis av. du Peuple Belge, 59800 LILLE (FR); CANO, Jean-Paul, F-94430 Chennevières sur Marne (FR)
(74) Mandataire: Catherine, Alain
(86) Numéro de dépôt international: FR0002224
(87) Numéro de publication internationale: WO01010940

(56) Documents cités:
- EP-A- 0 162 230
- WO-A-98/25654
- DE-A- 2 658 482
- FR-A- 2 439 072
- US-A- 3 904 732

## Description

La présente invention concerne d'une manière générale un procédé de surfaçage d'une face d'un article d'optique en matériau thermoplastique transparent.

Classiquement, les faces principales d'un article d'optique sont soumises à un surfaçage.

Le surfaçage d'un article d'optique comprend l'ensemble des opérations conduisant à la réalisation d'un article d'optique tel qu'un verre dont les surfaces sont parfaitement polies et présentent les courbures (puissances) désirées.

Typiquement, le surfaçage comprend trois étapes successives, à savoir l'ébauchage, le doucissage et le polissage.

L'ébauchage est une étape de traitement mécanique qui, à l'aide d'un outil diamanté à gros grains ou une fraise à plaquettes, a pour objet la mise à la courbure d'une face d'un article d'òptique tel qu'un verre ou une lentille.

Le doucissage est également une étape de traitement mécanique qui se pratique après l'ébauchage, à l'aide d'un outil diamanté à grain fin ou avec de l'émeri (ou un papier ou carborundum). La surface de l'article d'optique après un tel doucissage présente un aspect satiné.

La dernière opération du surfaçage qui conduit à une surface parfaitement polie et transparente est dénommée polissage et consiste encore en une étape de traitement mécanique à l'aide de disques de feutre en contact avec une suspension d'un abrasif fin.

L'ébauchage qui, comme indiqué ci-dessus, a pour but principal de conférer à au moins une face principale de l'article optique tel qu'un verre ou une lentille, une courbure désirée, est une étape de courte durée qui a pour résultat un article optique opaque dont la face ébauchée présente des ondulations, défauts de grande amplitude et de basse fréquence, généralement sous la forme d'un motif en spirale, auxquelles se superpose une rugosité constituée par des défauts de faible amplitude et de fréquence élevée.

Le doucissage modifie encore la géométrie de la face traitée de l'article optique mais a essentiellement pour objet de faire disparaître autant que possible les ondulations.

Cette étape de traitement mécanique conduit à un article translucide (mais non encore transparent) et dont la face doucie comporte encore une rugosité importante.

Enfin, le polissage, étape de traitement mécanique relativement longue, qui ne modifie pas la géométrie de la face traitée de l'article, élimine autant que possible la rugosité restante pour finalement obtenir un article optique transparent.

Bien qu'un surfaçage purement mécanique tel que décrit ci-dessus permette d'obtenir des articles optiques tant en verres minéraux qu'en verres organiques acceptables, il présente divers inconvénients.

Tout d'abord, c'est un procédé long, en particulier dû à l'étape de polissage. La pratique a également montré qu'il était difficile d'éliminer les ondulations de grande amplitude et de basse fréquence. Enfin, les étapes de doucissage et de polissage mécanique sont des étapes qui nécessitent un parc d'outillage important et qui sont donc relativement coûteuses.

Le brevet français n° 2 439 072 décrit un procédé de polissage des surfaces de matières plastiques, par exemple de polycarbonate, par pulvérisation sur la surface à polir d'une vapeur d'un solvant.

Le brevet US-3 933 518 décrit un procédé pour refluidifier des surfaces de matières thermoplastiques par traitement avec des vapeurs de solvant afin d'en éliminer les imperfections.

Le brevet US-4 376 751 décrit un procédé pour produire une surface lisse sur un article en matériau thermoplastique qui consiste à immerger l'article dans un bain contenant au moins un solvant du matériau thermoplastique et un non solvant du matériau thermoplastique.

Le document DE-A-2 658 482 décrit un procédé d'obtention de surfaces de polycarbonate très brillantes dans lequel des parties du polycarbonate sont traitées par une vapeur, contenant de l'acétone, du dichlorométhane ou du chloroforme et un solvant inerte.

La présente invention a donc pour objet un procédé de surfaçage d'une face d'un article d'optique en matériau thermoplastique qui soit simple à mettre en oeuvre, rapide et permettant d'éliminer au moins la rugosité de surface sans déformation de la géométrie de la face traitée de l'article optique.

On a maintenant trouvé qu'il était possible de surfacer un article optique en matériau thermoplastique transparent en remplaçant au moins une des étapes mécaniques de doucissage et de polissage par une étape de doucissage et/ou de polissage par attaque au moyen d'un solvant ou d'un mélange de solvants.

Selon l'invention, le procédé de surfaçage d'au moins une face principale d'un article optique en matériau thermoplastique transparent comprend une étape d'ébauchage, une étape de doucissage et une étape de polissage et se caractérise par le fait que l'étape de doucissage et/ou de polissage consiste à effectuer une attaque de la face avec un solvant ou un mélange de solvants organiques du matériau thermoplastique transparent de l'article optique.

De préférence, l'étape d'attaque est l'étape de polissage du procédé de surfaçage, c'est-à-dire l'étape d'élimination de la rugosité de la face de l'article.

Généralement, après ébauchage, la rugosité de la face de l'article se caractérise par une moyenne des écarts du profil de rugosité par rapport à la ligne moyenne, Ra, de 0,1 à 0,9 µm, typiquement de 0,2 à 0,5 µm. L'étape de polissage par attaque selon l'invention permet de réduire la valeur de Ra d'un facteur 5 ou plus.

L'étape d'attaque du procédé de surfaçage selon l'invention peut être mise en oeuvre de plusieurs façons.

Dans une première mise en oeuvre, l'attaque de la face de l'article peut se faire par mise en contact de la face de l'article avec une phase vapeur d'un solvant ou d'un mélange de solvants du matériau thermoplastique de l'article. La phase vapeur du solvant ou mélange de solvants peut être obtenue par chauffage du solvant et être elle-même à une température supérieure à la température ambiante ou encore sans chauffage, par saturation en vapeur du solvant ou mélange de solvants, la phase vapeur étant alors à la température ambiante.

Pour cette étape d'attaque avec un solvant ou mélange de solvants en phase vapeur, et à chaud, il est recommandé d'utiliser une durée de traitement relativement courte, généralement de 5 minutes ou moins, afin d'éviter une déformation de la face traitée de l'article.

Lors de cette attaque en phase vapeur à chaud, l'article d'optique peut être lui-même chauffé à une température supérieure à la température ambiante, mais généralement inférieure à la température d'ébullition du solvant ou du mélange de solvants. On évite ainsi une trop forte condensation de vapeur sur la face lors de l'attaque.

D'une manière générale et quel que soit le mode d'attaque, l'attaque doit être relativement courte et généralement de 5 minutes ou moins. On a constaté, particulièrement pour un article au polycarbonate, qu'une attaque prolongée se traduisait par une tendance de la rugosité à augmenter à nouveau.

Toutefois, l'attaque par un solvant ou mélange de solvants en phase vapeur, à température ambiante, telle que par saturation de vapeur de solvant, autorise des temps de traitement plus longs.

Dans une seconde mise en oeuvre de l'étape d'attaque, l'article optique en matériau thermoplastique est trempé dans le solvant ou mélange de solvants à l'état liquide.

Dans une troisième mise en oeuvre préférée de l'étape d'attaque selon l'invention, la mise en contact du solvant ou mélange de solvants avec la face de l'article optique s'effectue par centrifugation, par exemple en déposant une quantité appropriée de solvant ou mélange de solvants sur la face à traiter d'un article optique mis en rotation au moyen d'un dispositif approprié. Ce mode de réalisation du procédé de l'invention présente les avantages d'être rapide (quelques dizaines de secondes et généralement de l'ordre de 10 secondes), d'être simple et de permettre une automatisation de traitement.

Dans ce mode centrifuge d'attaque, le solvant ou mélange de solvants peut être initialement déposé au centre de la face à traiter de l'article pour, par centrifugation, être réparti sur la totalité de la face. Toutefois, de préférence, le solvant ou mélange de solvants est déposé radialement par rapport à la face à traiter de l'article alors que l'article est mis en rotation par le dispositif de centrifugation.

Plus précisément, le dépôt radial consiste, alors que l'article est en rotation, à déposer du solvant ou mélange de solvants le long d'un rayon par rapport à l'axe de rotation.

Bien que l'on puisse effectuer ce dépôt radial du solvant ou mélange de solvants, soit à partir du centre soit à partir de la périphérie de l'article, on préfère un dépôt radial du centre vers la périphérie de l'article pour une meilleure uniformité de l'attaque.

Bien évidemment, il est possible de combiner les différents modes de mise en oeuvre de l'étape d'attaque du procédé de l'invention. En particulier, on peut combiner une étape d'attaque par centrifugation avec une étape d'attaque en phase vapeur. Dans ce cas, il est préférable d'effectuer en premier l'attaque en phase vapeur puis de la faire suivre d'une attaque par centrifugation.

Le procédé de surfaçage de l'invention peut s'appliquer à tout article ophtalmique en matériau thermoplastique transparent classiquement utilisé dans le domaine considéré.

Parmi ces matériaux thermoplastiques, on peut citer les polycarbonates, les poly(méth)acrylates, les polythio(méth)acrylates et leurs mélanges. Les matériaux thermoplastiques préférés sont les polycarbonates, par exemple le polycarbonate de bisphénol-A.

Le solvant ou mélange de solvants convenant dans le procédé de l'invention peut être tout solvant ou mélange de solvants du matériau thermoplastique à traiter.

Parmi les solvants préférés, en particulier pour des articles optiques en polycarbonate, on peut citer le dichlorométhane (CH₂Cl₂), le trichlorométhane (CHCl₃), les dichloroéthanes tels que le 1,2-dichloroéthane, l'acétone, le méthyléthylcétone, le tétrahydrofuranne (THF), le dioxanne et leurs mélanges.

Le solvant ou mélange de solvants du matériau thermoplastique à traiter peut comprendre, dans une proportion limitée, jusqu'à 20% en poids, de préférence jusqu'à 15% en poids d'un diluant organique non solvant du matériau thermoplastique à traiter. A titre d'exemple d'un tel diluant organique, on peut citer le diacétate d'éthylèneglycol.

De préférence, dans l'étape d'attaque, le solvant ou mélange de solvants est pur, c'est-à-dire qu'il ne contient que du ou des solvants et lors de l'attaque de la face de l'article, en particulier en polycarbonate, uniquement du matériau thermoplastique de l'article est dissout dans ce solvant ou ces solvants.

En général, à la fin de l'étape d'attaque selon l'invention, le ou les solvants sont évaporés de sorte qu'à la fin de cette étape on récupère un article optique final ou prêt pour un traitement ultérieur sans qu'il soit nécessaire de mettre en oeuvre une étape supplémentaire d'élimination du ou des solvants.

Le procédé de la présente invention est illustré par les exemples suivants et les figures annexées qui représentent, respectivement :
Figure 1 - un graphe représentatif du profil d'ondulation et de rugosité d'une face principale d'un article optique en polycarbonate soumis uniquement à un ébauchage mécanique classique;
Figure 2 - un graphe représentatif du profil d'ondulation et de rugosité de la face principale de l'article optique de la figure 1 après une étape d'attaque selon l'invention par centrifugation avec comme solvant d'attaque du dichlorométhane;
Figure 3 - un graphe représentatif du profil d'ondulation et de rugosité d'une surface principale d'un article optique en polycarbonate soumis uniquement à un ébauchage mécanique classique;
Figure 4 - un graphe représentatif du profil d'ondulation et de rugosité de la face principale de l'article optique de la figure 3, après une étape d'attaque selon l'invention par centrifugation avec comme solvant d'attaque du 1,2-dichlorométhane;
Figure 5 - un graphe représentatif du profil d'ondulation et de rugosité d'une face principale d'un article optique en polycarbonate soumis uniquement à une étape d'ébauchage mécanique classique;
Figure 6 - un graphe représentatif du profil d'ondulation et de rugosité de la face principale de l'article optique de la figure 7, après une attaque selon l'invention par centrifugation avec comme solvant d'attaque du THF;
Figure 7 - un graphe représentatif du profil d'ondulation et de rugosité d'une face principale d'un article optique en polycarbonate ayant subi une étape d'ébauchage et une étape de doucissage classiques;
Figure 8 - un graphe représentatif du profil d'ondulation et de rugosité de la face principale de l'article optique de la figure 7, après une attaque selon l'invention par centrifugation avec comme solvant le dichlorométhane;
Figure 9 - un graphe représentatif du profil d'ondulation et de rugosité d'une face principale d'un article d'optique en polycarbonate après ébauchage et doucissage mécaniques;
Figure 10 - un graphe représentatif du profil d'ondulation et de rugosité de la face principale de l'article de la figure 9 après une étape d'attaque selon l'invention par centrifugation avec comme solvant d'attaque du 1,2-dichlorométhane;
Figure 11 - un graphe représentatif du profil d'ondulation et de rugosité d'une surface principale d'un article en polycarbone après ébauchage et doucissage mécaniques classiques;
Figure 12 - un graphe représentatif du profil d'ondulation et de rugosité de la surface de l'article de la figure 11 après une étape d'attaque selon l'invention par centrifugation avec comme solvant du THF;
Figure 13 - un graphe représentatif du profil d'ondulation et de rugosité d'une face principale d'un article optique en polycarbonate après un simple ébauchage mécanique classique;
Figure 14 - un graphe représentatif du profil d'ondulation et de rugosité de la face principale de l'article de la figure 13, après une étape d'attaque en phase vapeur selon l'invention d'une durée de 1 minute 30 secondes avec comme solvant le dichlorométhane;
Figure 15 - un graphe représentatif du profil d'ondulation et de rugosité d'une face principale d'un article optique en polycarbonate après une simple étape d'ébauchage mécanique classique;
Figure 16 - un graphe représentatif du profil d'ondulation et de rugosité de la face principale de l'article de la figure 15 après une étape d'attaque en phase vapeur selon l'invention d'une durée de 5 minutes et avec comme solvant du dichlorométhane;
Figure 17 - un graphe représentatif du profil d'ondulation et de rugosité d'une face principale d'un article optique en polycarbonate après une simple étape d'ébauchage mécanique classique;
Figure 18 - un graphe représentatif du profil d'ondulation et de rugosité de la face principale de l'article optique de la figure 17 après une étape d'attaque en phase vapeur de 10 minutes;
Figure 19 - un graphe représentatif du profil d'ondulation et de rugosité d'une face principale d'un article optique en polycarbonate après ébauchage et doucissage mécaniques classiques;
Figure 20 - un graphe représentatif du profil d'ondulation et de rugosité de la face principale de l'article de la figure 19 après une étape d'attaque en phase vapeur de 1 minute 30 secondes avec comme solvant le dichlorométhane;
Figure 21 - un graphe représentatif du profil d'ondulation et de rugosité d'une face principale d'un article d'optique en polycarbonate après ébauchage classique;
Figure 22 - un graphe représentatif du profil d'ondulation et de rugosité de la face principale de l'article de la figure 20 après une étape d'attaque en phase vapeur de 1 minute 30 avec un mélange 50/50 de chloroforme 1,2-dichlorométhane à chaud suivie d'une étape d'attaque par centrifugation avec du dichlorométhane;
Figure 23 - un graphe représentatif du profil d'ondulation et de rugosité de la face principale d'un article optique en polycarbonate; et
Figure 24 - un graphe représentatif du profil d'ondulation et de rugosité de l'article optique de la figure 23 après une attaque en phase vapeur à chaud selon l'invention avec comme solvant un mélange 50/50 de 1,2-dichloroéthane/dichlorométhane.

Dans la présente description et en particulier dans les exemples suivants, les termes et expressions ci-dessous signifient :
- Rugosité : Défauts de faible amplitude et fréquence élevée apparaissant à la surface de l'article optique après ébauchage. Ces défauts se caractérisent généralement par une valeur Ra, moyenne des écarts du profil des défauts par rapport à la ligne moyenne de 0,1 à 0,9 µm, typiquement 0,2 à 0,5 µm.
- Ondulations : Défauts de forte amplitude et faible fréquence apparaissant à la surface de l'article optique après ébauchage et sur lesquels se superpose la rugosité.

Les articles optiques en polycarbonate utilisés dans les exemples ci-après sont des palets (semi-finis) en polycarbonate, commercialisés par la Société GENTEX, de diamètre 80 mm et d'épaisseur 10 à 20 mm.

L'ébauchage mécanique classique d'une face principale des articles comprend l'usinage de la face du palet avec une fraise à plaquettes pour enlever de 4 à 15 mm du matériau des articles et engendrer une forme sphérique ou torique. L'ébauchage est de 20 secondes à 1 minute selon l'état de surface recherché.

Le doucissage mécanique classique d'une face principale des articles comprend l'usinage de la face ébauchée de l'article à l'aide d'une surfaceuse ORMAREX ou LOH avec outil de forme sur lequel est collé un tampon abrasif de douci en carbure de silicium. Le temps de douci est de 2 minutes 30 secondes par article.

Les graphes de profil de rugosité et de forme ont été réalisés au moyen d'un dispositif FTS de la Société RANK-TAYLOR-HOBSON. Profilomètre & rugosimètre par interférométrie LASER.

### Principe

Le FTS mesure de façon non destructive les caractéristiques géométriques d'une coupe de la surface des verres dans l'état poli ou non poli.

Cette mesure de surface s'effectue dans un plan de coupe choisi.

On obtient ainsi un profil en deux dimensions, représenté par son équation : Z = f(x).

Le FTS est donc utilisé principalement pour des verres de révolution.

De ce profil, on peut extraire les caractéristiques en terme de forme, ondulation et de rugosité.

Ces mesures peuvent être utilisées pour contrôler l'état de surface à chaque stade de la production du verre (usinage, doucissage, polissage).

### Méthode

Le stylet se déplace sur la surface de la pièce dans son plan de profilomètre.

Le stylet utilisé est une pointe diamantée de rayon 2 µm.

Il enregistre les altitudes Z de la surface en fonction du déplacement x. On obtient la courbe Z = f(x).

Le profil est rapporté à une sphère idéale, c'est-à-dire une sphère pour laquelle les écarts de profil par rapport à cette sphère sont minimaux.

On tire de cette courbe les caractéristiques d'écart de forme par rapport à des éléments géométriques.

On peut aussi obtenir les caractéristiques du profil en terme d'ondulation et de rugosité.

Tous les résultats sont calculés par ordinateur, les paramètres et filtres étant conformes aux normes internationales, y compris les caractéristiques du filtre Gaussien et le choix de la bande passante utilisée pour l'évaluation des données.

### Quelques définitions

Filtre : il supprime du signal de profil les composants dont la longueur d'onde est plus longue. Un tel filtre reçoit le nom de "passe-bas".

### Remarques sur les graphes

### Graphes de rugosité :

La mesure est faite sur 10 mm avec le palpeur de rugosité (pointe diamantée de rayon 2 µm) et commence à 10 mm du centre.

Les résultats chiffrés (ex : Ra = 0,02 µm) correspondent à une mesure de rugosité effectuée avec un filtre Gaussien et la longueur du cut-off est de 0,08 µm. Ceci revient à filtrer le défaut d'ondulation. Il ne reste donc que le défaut de rugosité. Le graphe correspondant à cette mesure serait une droite, puisque les ondulations de la surface sont filtrées.

Les graphes joints à la présente description correspondent à un retraitement de la mesure précédente sauf qu'aucun filtre n'est utilisé. On peut donc ainsi visualiser les défauts de rugosité et d'ondulation.

### Attaque par centrifugation

La face à traiter de chaque article est mesurée avant traitement en rugosité et éventuellement en forme.

La face de l'article à traiter est préalablement nettoyée à l'isopropanol (frottement manuel) pour enlever les poussières résiduelles de la face.

L'article est alors placé sur l'axe du dispositif de centrifugation où il est maintenu par aspiration.

Une fois l'article amené à une vitesse de rotation de 4000 tours/minute, le solvant est déposé de manière dynamique sur la face de l'article en un mouvement rapide du centre vers la périphérie (C à B), de façon à recouvrir l'ensemble de la face. Cette dispense de solvant s'effectue en 1 seconde environ. Cette dispense dynamique (dépôt radial) permet une répartition homogène du solvant sur la face de l'article.

Après la dispense du solvant, on laisse tourner l'article à une vitesse de 4000 tours/minute pendant environ 9 secondes, soit un temps total d'attaque d'environ 10 secondes. Pendant les dernières 9 secondes, le solvant en excès sur la face est éjecté. Le solvant qui a pénétré dans le réseau du polycarbonate s'évapore.

La rotation est alors arrêtée (3 secondes environ sont nécessaires pour l'arrêt complet) et l'article est récupéré.

A ce stade, la face traitée de l'article est sèche et l'article peut être manipulé.

La face de l'article est alors examinée visuellement, en réflexion sous un éclairage fluorescent sur fond noir et éventuellement à la lampe à arc.

La rugosité de la face et éventuellement sa forme sont mesurées à l'aide du même instrument.

### Attaque par saturation en vapeur de solvant

La face à traiter de chaque article est mesurée avant traitement en rugosité et éventuellement en forme.

Le matériel utilisé comprend une cuve en verre, hermétique à l'air. Cette cuve se compose de deux parties : un récipient et un couvercle maintenus par de la graisse siliconée.

A mi-hauteur du récipient de la cuve se trouve une grille métallique qui repose sur la paroi du récipient. Cette grille est percée de petits trous répartis uniformément.

Le solvant est placé dans le récipient sous la grille. La hauteur de solvant est d'environ 5 cm. Le solvant est agité magnétiquement pour obtenir une répartition homogène de vapeur. Après 10 minutes environ, la cuve est saturée en vapeur.

Une fois la cuve saturée en vapeur de solvant, l'article est placé sur la grille avec la face à traiter vers le bas (face convexe vers le haut de la cuve, face concave vers le bas dans le cas d'un verre dont on surface la face arrière).

La cuve est refermée. Le solvant est agité doucement pour éviter toute projection directe sur l'article. Le temps de contact article/vapeur est mesuré à partir du moment de la fermeture de la cuve. Le temps de contact peut être variable selon l'état de surface final recherché.

Une fois le temps de contact écoulé, la cuve est ouverte et l'article retiré. L'article est laissé à l'air libre quelques minutes pour évaporer lentement le solvant restant. L'article peut être alors manipulé.

Les faces traitées des articles sont alors mesurées en rugosité et éventuellement en forme.

### Attaque en phase vapeur à chaud

La face à traiter de chaque article est mesurée avant traitement en rugosité et éventuellement en forme. L'instrument de mesure utilisé est un palpeur de forme qui est déplacé sur la surface. Le graphe en sortie d'analyse donne une évaluation topographique de la surface initiale.

Tous les articles sont placés dans une étuve à 60°C (pendant environ 15 minutes) avant traitement par la vapeur. Ceci évite une trop forte condensation des vapeurs sur la surface lorsque l'article est placé dans la cuve.

Le matériel utilisé est constitué d'une cuve en verre, hermétique à l'air.

Cette cuve est composée de deux parties : un récipient et un couvercle, qui sont maintenus par de la graisse siliconée.

A mi-hauteur du récipient de cette cuve se trouve une grille métallique qui repose sur les parois du récipient.

Cette grille est percée de petits trous répartis uniformément.

Le solvant est placé dans le récipient et sous la grille. Une hauteur de solvant d'environ 5 cm est suffisante.

Le solvant est agité magnétiquement et chauffé jusqu'au reflux à l'aide d'un pistolet thermique. Lorsque le reflux est suffisamment important, le chauffage est arrêté.

La cuve est prête à recevoir l'échantillon.

Une fois que le reflux du solvant est bien installé, l'article à polir est placé sur la grille. Il a été remarqué que le processus de polissage était plus homogène lorsque l'article était placé face convexe vers le bas, face concave vers le haut. La face à polir n'est donc plus directement en contact avec les vapeurs ascendantes.

Ce positionnement permet une manipulation plus pratique de l'échantillon et est moins déformant pour la surface à polir.

La cuve est refermée. Le solvant est agité doucement afin d'éviter toute projection directe sur l'article.

Le temps de contact substrat/vapeurs est mesuré à partir du moment où la cuve est refermée. Ce temps de contact peut être variable selon l'état de surface final recherché.

(Lorsque les vapeurs sont chaudes, le processus de polissage de la surface est accéléré. Les temps de contacts sont donc plus courts que lorsque l'article est traité avec des vapeurs froides).

Ainsi, la durée de contact avec le solvant chaud est de 30 secondes à 90 secondes pour une face ébauchée et de 10 secondes à 60 secondes pour une surface doucie.

Lorsque le temps de contact est écoulé, la cuve est ouverte et l'article est retiré. Celui-ci est placé à l'air libre quelques minutes sur une paillasse de façon à ce que le solvant emprisonné dans le réseau puisse s'évaporer lentement. L'article peut ensuite être manipulé.

La face de l'article après traitement peut être observée en réflexion sous éclairage fluorescent sur fond noir.

Dans le cas des surfaces transparentes, les articles peuvent être observés à la Lampe à Arc.

Chaque article traité est mesuré en rugosité et éventuellement en forme à l'aide du même instrument de mesure qu'avant traitement.

L'effet des vapeurs et des temps de contact variables peuvent être caractérisés par une analyse comparative des graphes FTS avant et après traitement.

Les vapeurs chaudes se condensent sur la surface immédiatement à l'instant où l'article est placé dans la cuve. Il y a formation d'un film de solvant directement en contact avec la surface à polir.

Ce procédé, comme précédemment avec les vapeurs froides, permet de réduire l'amplitude des ondulations, mais aussi permet simultanément une forte réduction de la rugosité (0,01 µm < Ra < 0,03 µm).

Les surfaces obtenues sont donc transparentes.

### EXEMPLES

On a soumis à des attaques selon l'invention, dans les conditions indiquées dans le tableau ci-dessous, des faces ébauchées ou ébauchées et doucies classiquement de verres en polycarbonate.

On a mesuré le Ra et établi des graphes de rugosité pour les faces des verres avant et après attaque chimique. Les résultats sont donnés dans le tableau ci-dessous.

**TABLEAU**

| Exemple | Etat initial de la face traitée | | Attaque | | | Solvant | Ra | |
|---|---|---|---|---|---|---|---|---|
| | Ebauchéee | Doucie | Centrifugation | Saturation de vapeur (durée d'attaque en nm) | Vapeur chaude (durée d'attaque en s) | | Avant attaque | Après attaque |
| | | | | | | | | |
| 1 | X | - | C à B | - | - | CH₂Cl₂ | 0,32 | 0,02 |
| 2 | X | - | C à B | - | - | ClCH₂CH₂Cl | 0,35 | 0,06 |
| 3 | X | - | C à B | - | - | THF | 0,27 | 0,06 |
| 4 | X | X | C à B | - | - | CH₂Cl₂ | 0,31 | 0,01 |
| 5 | X | X | C à B | - | - | CICH₂CH₂Cl | 0,24 | 0,05 |
| 6 | X | X | C à B | - | - | THF | 0,24 | 0,05 |
| 7 | X | X | - | 1,5 | - | CH₂Cl₂ | 0,29 | 0,05 |
| 8 | X | X | - | 5 | - | CH₂Cl₂ | 0,3 | 0,07 |
| 9 | X | X | - | 10 | - | CH₂Cl₂ | 0,36 | 0,09 |
| 10 | X | X | X | 1,5 | - | CH₂Cl₂ | 0,22 | 0,05 |
| 11 | X | - | X | - - | 90 | CHCl₃/CH₂Cl₂ (50/50) | 0,39 | 0,04 |
| 12 | X | - | - | - | 60 | ClCH₂CH₂Cl/ CH₂Cl₂ (50/50) | 0,47 | 0,02 |

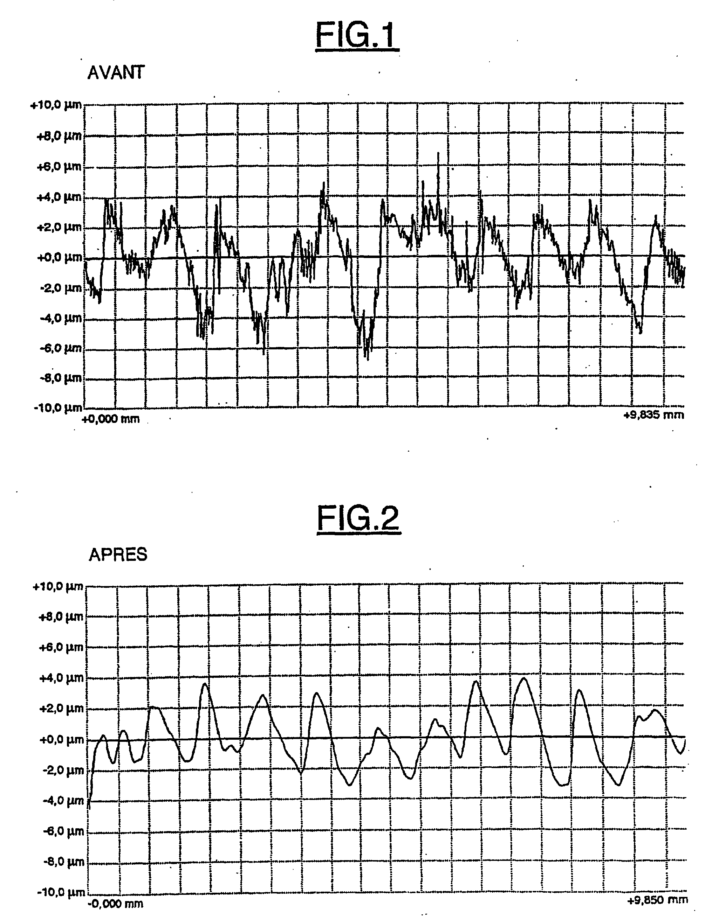

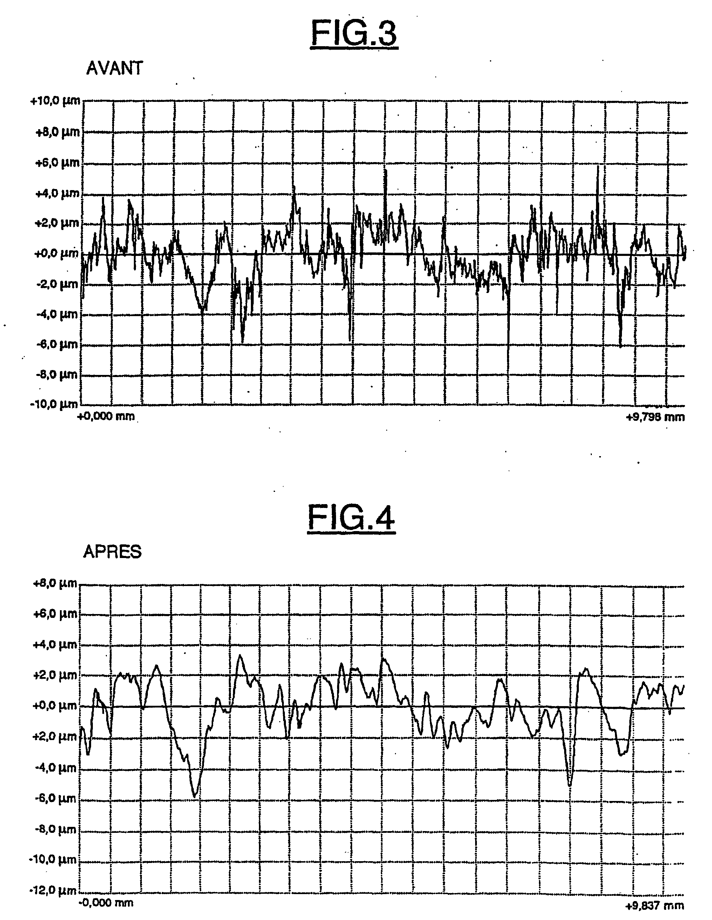

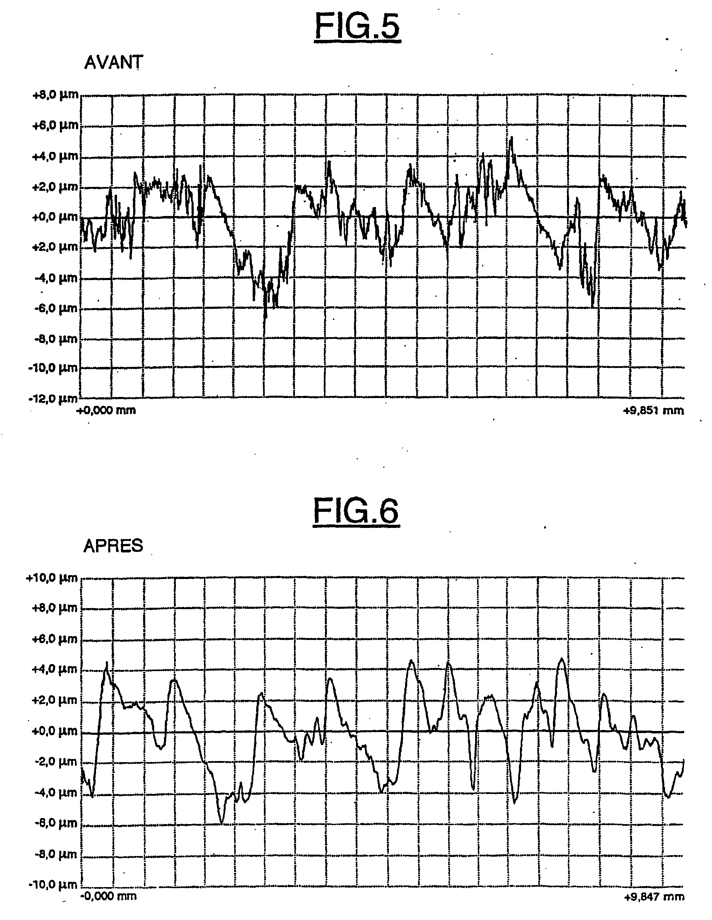

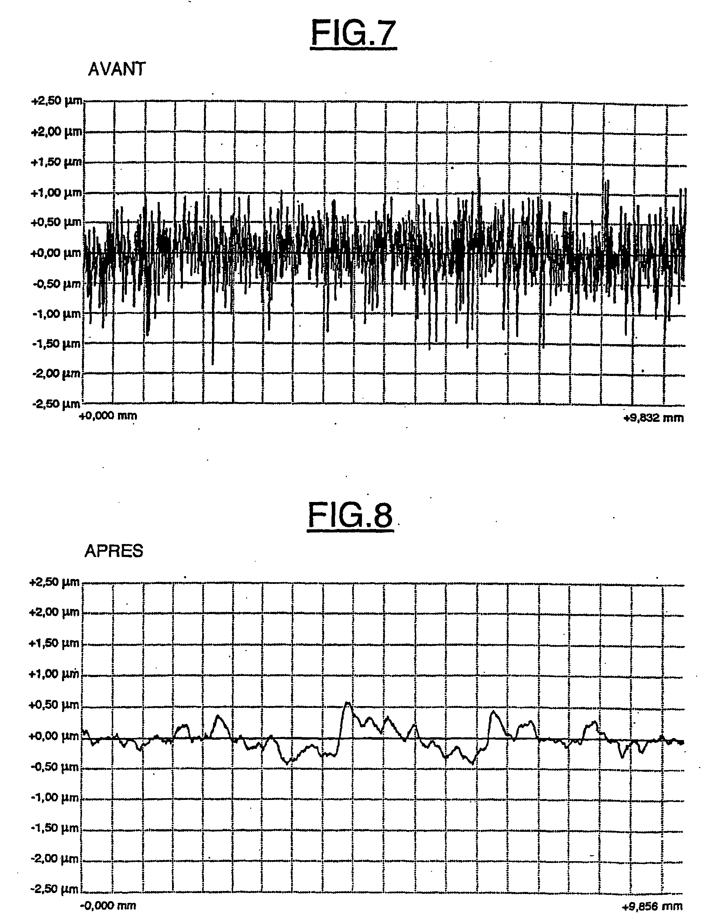

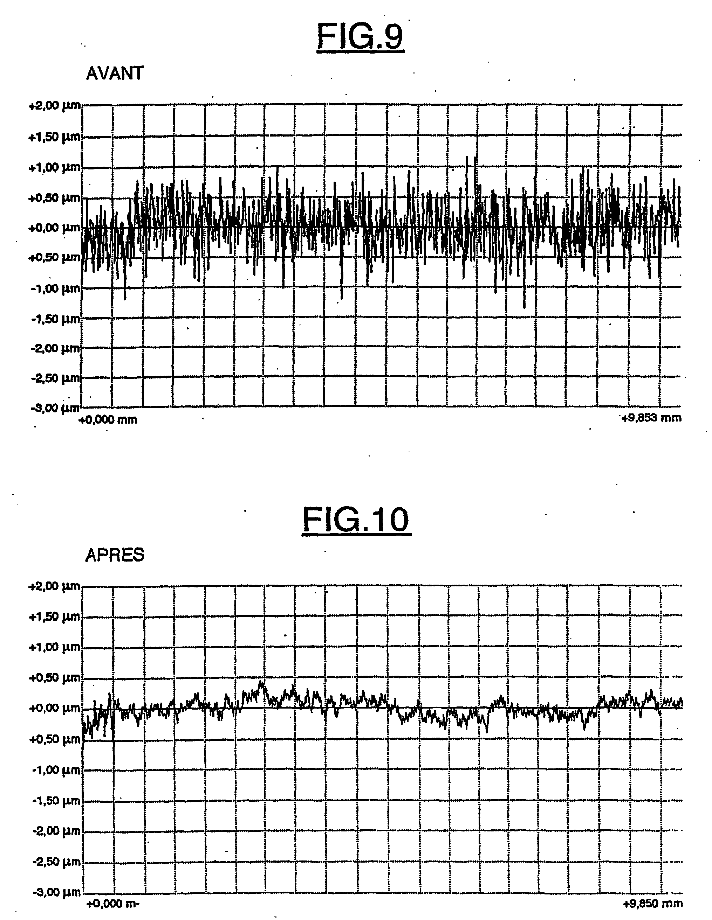

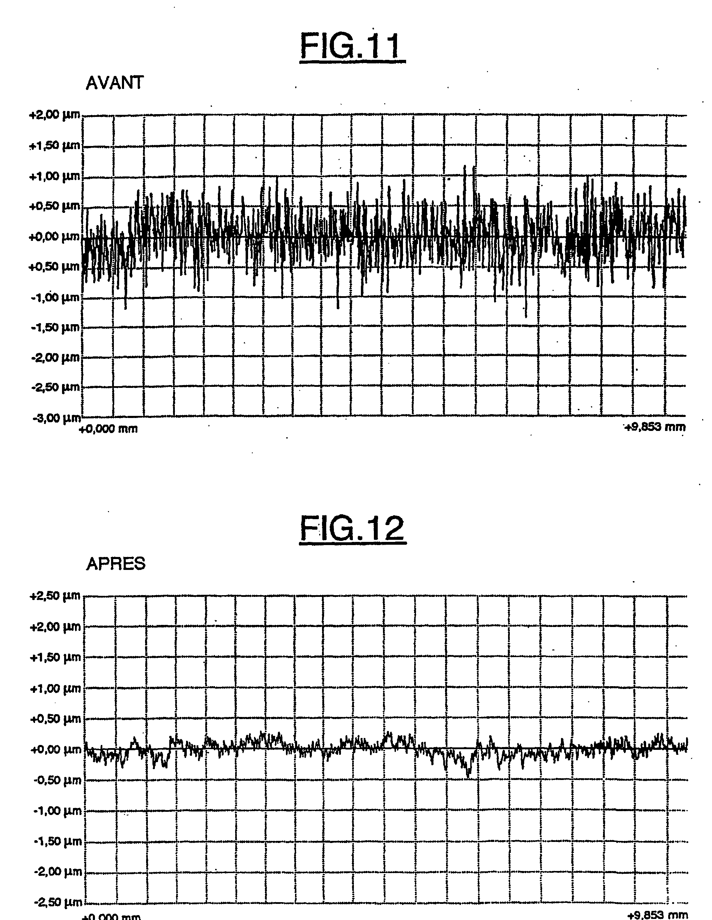

Les figures 1 à 12 sont des graphes représentatifs de la rugosité des faces des articles des exemples 1 à 6 avant et après attaque par centrifugation avec différents solvants.

Ces graphes montrent une diminution importante de la rugosité tant pour des faces uniquement ébauchées que des faces ébauchées et doucies.

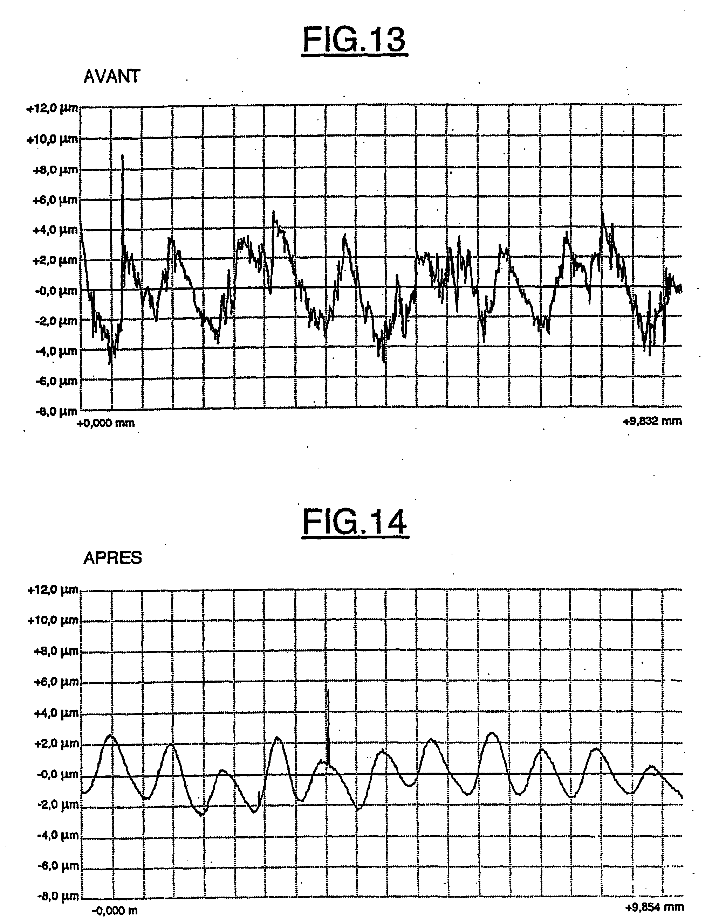

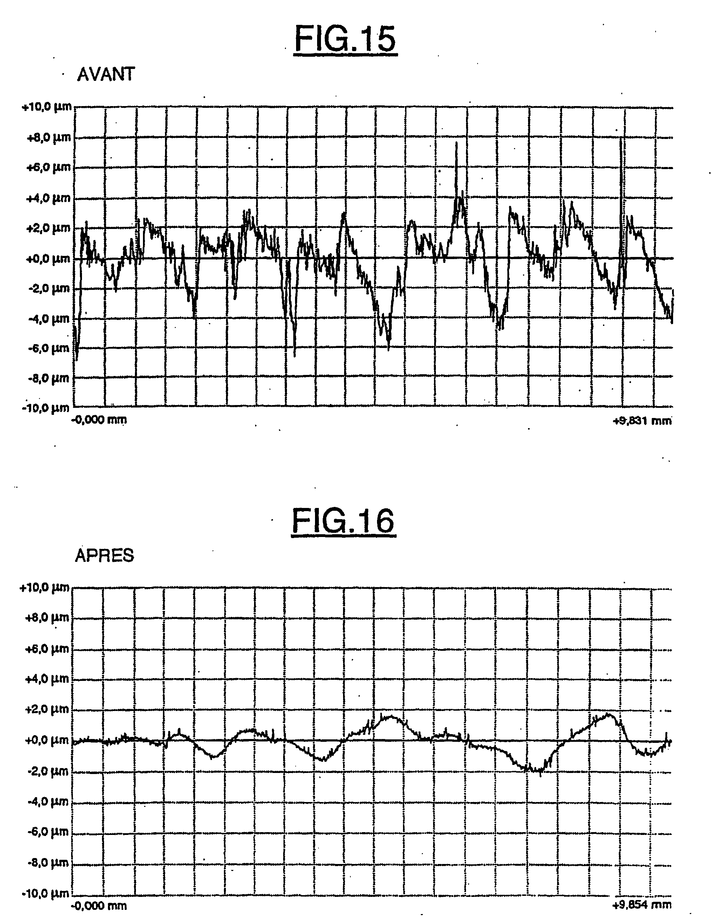

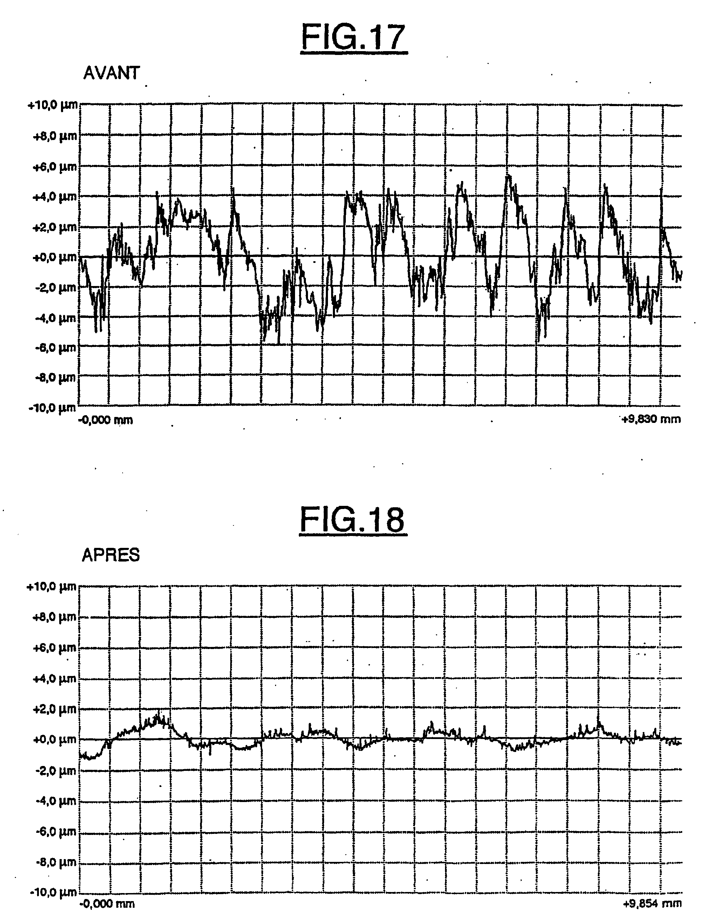

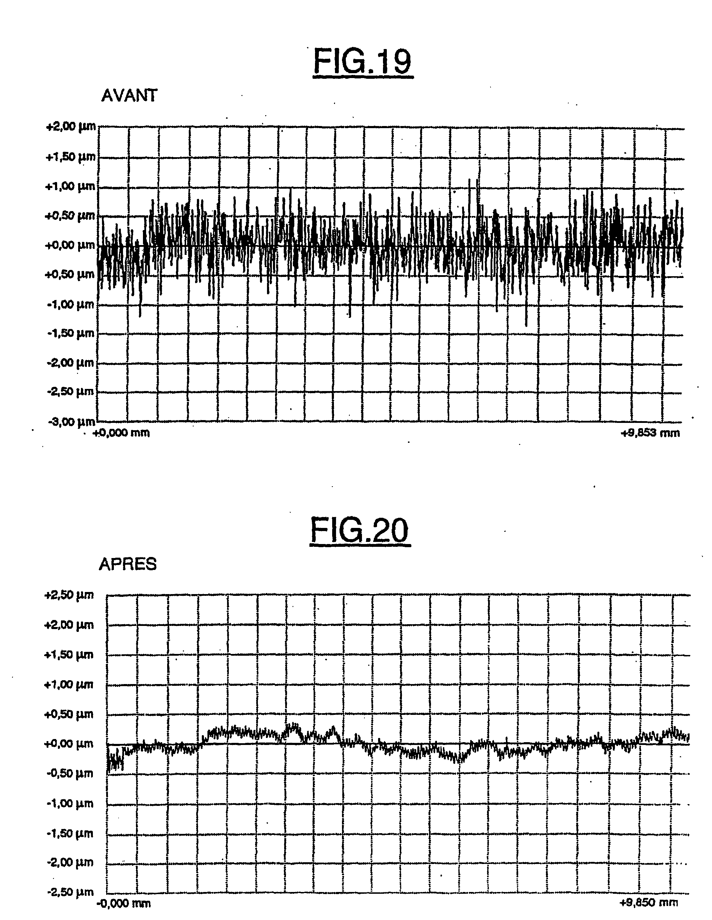

Les figures 13 à 20 sont des graphes représentatifs du profil de rugosité des faces des verres des exemples 7 à 10 avant et après attaque selon l'invention. Ces graphes montrent une diminution importante de la rugosité après l'attaque tant pour des faces simplement ébauchées que des faces ébauchées et doucies. Toutefois, les figures 14, 16 et 18 montrent que l'augmentation de la durée d'attaque par la vapeur à 5 minutes et plus, conduit à un léger réaccroissement de la rugosité.

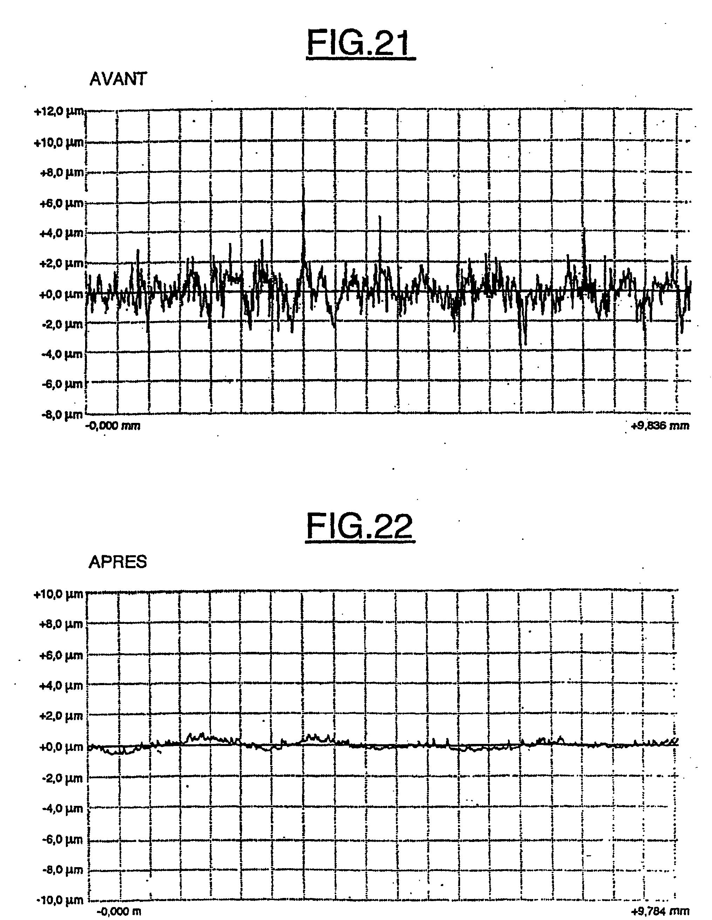

Les figures 21 et 22 sont des graphes représentatifs du profil de rugosité des verres de l'exemple 11 avant et après attaque d'abord par centrifugation, puis en phase vapeur chaude.

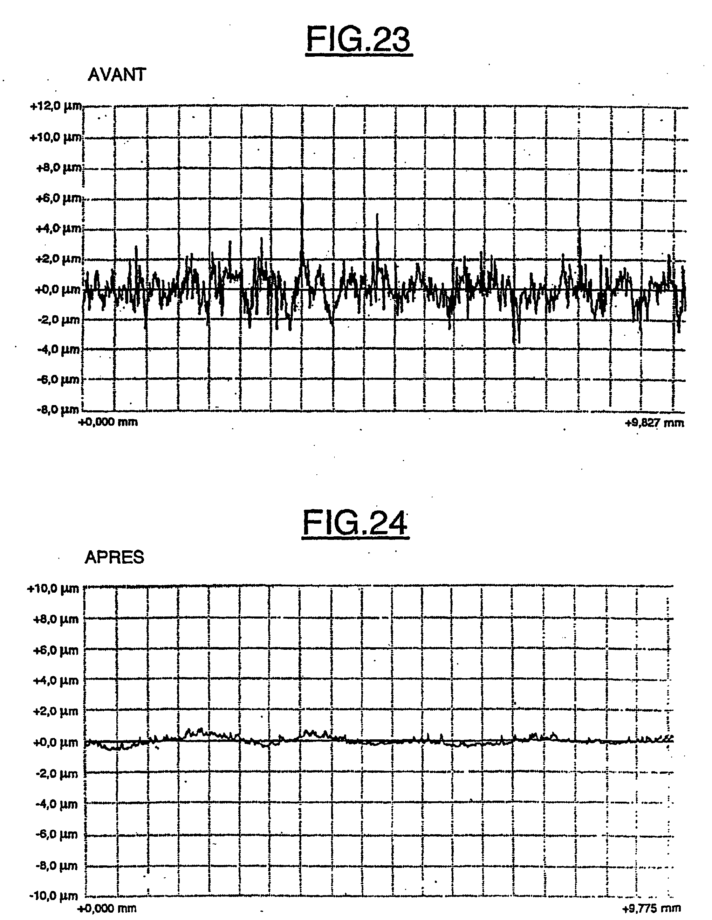

Les figures 23 et 24 sont des graphes représentatifs du profil de rugosité des verres de l'exemple 12 avant et après attaque en phase vapeur chaude.

## Revendications

1. Procédé de surfaçage d'au moins une face principale d'un article optique en matériau thermoplastique transparent comprenant une étape d'ébauchage, une étape de doucissage et une étape de polissage, **caractérisé en ce que** l'étape de doucissage et/ou l'étape de polissage consiste en une attaque de la face principale de l'article avec un solvant ou un mélange de solvants organiques du matériau thermoplastique transparent.

2. Procédé **caractérisé en ce que** l'attaque constitue l'étape de polissage.

3. Procédé selon la revendication 1 ou 2, **caractérisé en ce que** l'attaque s'effectue par centrifugation du solvant ou du mélange de solvants sur la face principale de l'article.

4. Procédé selon la revendication 3, **caractérisé en ce que** le solvant ou mélange de solvants est déposé sur la face principale suivant un dépôt radial.

5. Procédé selon la revendication 4, **caractérisé en ce que** le dépôt radial se fait du centre vers la périphérie de l'article.

6. Procédé selon la revendication 1 ou 2, **caractérisé en ce que** l'attaque s'effectue par mise en contact de la face principale avec une vapeur du solvant ou du mélange de solvants.

7. Procédé selon la revendication 6, **caractérisé en ce que** la vapeur est produite par chauffage du solvant ou mélange de solvants.

8. Procédé selon la revendication 7, **caractérisé en ce que** le solvant ou mélange de solvants est chauffé à sa température d'ébullition.

9. Procédé selon la revendication 6, **caractérisé en ce que** la mise en contact de la face principale avec la vapeur du solvant ou du mélange de solvants s'effectue par saturation avec de la vapeur de solvant ou du mélange de solvants.

10. Procédé selon la revendication 9, **caractérisé en ce que** la vapeur de solvant est à la température ambiante.

11. Procédé selon la revendication 1 ou 2, **caractérisé en ce que** l'étape d'attaque comprend une attaque par centrifugation et une attaque en phase vapeur.

12. Procédé selon la revendication 11, **caractérisé en ce que** l'attaque par centrifugation précède l'attaque en phase vapeur.

13. Procédé selon la revendication 11, **caractérisé en ce que** l'attaque par centrifugation suit l'attaque en phase vapeur.

14. Procédé selon la revendication 8, **caractérisé en ce que** l'article optique est chauffé à une température inférieure à la température d'ébullition du solvant ou mélange de solvants.

15. Procédé selon l'une quelconque des revendications précédentes, **caractérisé en ce que** le solvant est choisi parmi le dichlorométhane, les dichloroéthanes, l'acétone, la méthyléthylcétone, le trichlorométhane, le THF et le dioxanne.

16. Procédé selon l'une quelconque des revendications précédentes, **caractérisé en ce que** le matériau thermoplastique transparent est du polycarbonate.

17. Procédé selon l'une quelconque des revendications précédentes, **caractérisé en ce que** l'article optique est un verre de lunette.

## Patentansprüche

1. Verfahren zur Oberflächenbehandlung zumindest einer Hauptfläche eines optischen Gegenstandes aus transparentem thermoplastischem Material, umfassend einen Rohlingsbearbeitungsschritt, einen Glättungsschritt und einen Polierschritt, **dadurch gekennzeichnet, dass** der Glättungsschritt und/oder der Polierschritt in einem Anlösen der Hauptfläche des Gegenstandes mit einem Lösungsmittel oder einer Mischung an organischen Lösungsmitteln des transparenten thermoplastischen Materials besteht.

2. Verfahren nach Anspruch 1, **dadurch gekennzeichnet, dass** das Anlösen den Schritt des Polierens ausmacht.

3. Verfahren nach Anspruch 1 oder 2, **dadurch gekennzeichnet, dass** das Anlösen mittels Zentrifugation des Lösungsmittels oder der Mischung an Lösungsmitteln an der Hauptfläche des Gegenstandes erfolgt.

4. Verfahren nach Anspruch 3, **dadurch gekennzeichnet, dass** das Lösungsmittel oder die Mischung an Lösungsmitteln an der Hauptfläche entsprechend einer radialen Fällung gefällt wird.

5. Verfahren nach Anspruch 4, **dadurch gekennzeichnet, dass** die radiale Fällung von der Mitte hin zu der Peripherie des Gegenstandes erfolgt.

6. Verfahren nach Anspruch 1 oder 2, **dadurch gekennzeichnet, dass** das Anlösen durch in Berührungbringen der Hauptfläche mit einem Dampf des Lösungsmittels oder der Mischung an Lösungsmitteln erfolgt.

7. Verfahren nach Anspruch 6, **dadurch gekennzeichnet, dass** der Dampf oder Nebel durch Erwärmen des Lösungsmittels oder der Mischung an Lösungsmitteln erzeugt wird.

8. Verfahren nach Anspruch 7, **dadurch gekennzeichnet, dass** das Lösungsmittel oder die Mischung an Lösungsmitteln auf Siedetemperatur erwärmt wird.

9. Verfahren nach Anspruch 6, **dadurch gekennzeichnet, dass** das in Berührungbringen der Hauptfläche mit dem Dampf oder Nebel des Lösungsmittels oder der Mischung an Lösungsmitteln mittels Sättigung mit dem Dampf des Lösungsmittels oder der Mischung an Lösungsmitteln erfolgt.

10. Verfahren nach Anspruch 9, **dadurch gekennzeichnet, dass** der Dampf des Lösungsmittels bei Raumtemperatur oder Umgebungstemperatur vorliegt.

11. Verfahren nach einem der Ansprüche 1 oder 2, **dadurch gekennzeichnet, dass** der Schritt des Anlösens ein Anlösen mittels Zentrifugalwirkung und ein Anlösen in der Dampfphase umfasst.

12. Verfahren nach Anspruch 11, **dadurch gekennzeichnet, dass** das Anlösen durch Zentrifugation bzw. Zentrifugalwirkung dem Anlösen in der Dampfphase vorangeht.

13. Verfahren nach Anspruch 11, **dadurch gekennzeichnet, dass** das Anlösen durch Zentrifugalwirkung sich dem Anlösen in bzw. mittels Dampfphase anschließt.

14. Verfahren nach Anspruch 8, **dadurch gekennzeichnet, dass** der optische Gegenstand, auf eine Temperatur, die niedriger als die Siedetemperatur des Lösungsmittels oder der Mischung an Lösungsmitteln ist, erwärmt ist oder wird.

15. Verfahren nach einem der vorangegangenen Ansprüche, **dadurch gekennzeichnet, dass** das Lösungsmittel ausgewählt ist unter Dichlormethan, den Dichlorethanen, Azeton, Methylethylketon, Trichlormethan, THF und Dioxan.

16. Verfahren nach einem der vorangegangenen Ansprüche, **dadurch gekennzeichnet, dass** das thermoplastische, transparente Material Polycarbonat ist.

17. Verfahren nach einem der vorangegangenen Ansprüche, **dadurch gekennzeichnet, dass** der optische Gegenstand ein Brillenglas ist.

## Claims

1. Method of surface polishing of at least one principal surface of an optical article made from transparent thermoplastic material comprising a grinding step, a fine grinding step and a polishing step, **characterized in that** the fine grinding and/or polishing step comprises an attack on the principal surface of the article by a solvent or a mixture of organic solvents of the transparent thermoplastic material.

2. Method **characterized in that** the attack constitutes the polishing step.

3. Method according to claim 1 or 2, **characterized in that** the attack is performed by centrifugation of the solvent or mixture of solvents on the principal surface of the article.

4. Method according to claim 3, **characterized in that** the solvent or mixture of solvents is deposited on the principal surface following a radial deposition.

5. Method according to claim 4, **characterized in that** the radial deposition takes place from the centre to the edge of the article.

6. Method according to claim 1 or 2, **characterized in that** the attack is performed by placing the principal surface in contact with the vapour of a solvent or mixture of solvents.

7. Method according to claim 6, **characterized in that** the vapour is produced by heating the solvent or mixture of solvents.

8. Method according to claim 7, **characterized in that** the solvent or mixture of solvents is heated to its boiling point.

9. Method according to claim 6, **characterized in that** the contact of the principal surface with the vapour of the solvent or mixture of solvents is performed by saturation with the vapour of the solvent or mixture of solvents.

10. Method according to claim 9, **characterized in that** the solvent vapour is at ambient temperature.

11. Method according to claim 1 or 2, **characterized in that** the attack step comprises an attack by centrifugation and an attack in the vapour phase.

12. Method according to claim 11, **characterized in that** the attack by centrifugation is before the attack in the vapour phase.

13. Method according to claim 11, **characterized in that** the attack by centrifugation follows the attack in the vapour phase.

14. Method according to claim 8, **characterized in that** the optical article is heated to a temperature lower than the boiling point of the solvent or mixture of solvents.

15. Method according to any one of the preceding claims, **characterized in that** the solvent is selected from dichloromethane, the dichloroethanes, acetone, methyl ethyl ketone, trichloromethane, THF and dioxane.

16. Method according to any one of the preceding claims, **characterized in that** the transparent thermoplastic material is polycarbonate.

17. Method according to any one of the preceding claims, **characterized in that** the optical article is a spectacle lens.
